Europäisches Patentamt

European Patent Office

Office européen des brevets

(11) Publication number: **0 159 712**
**B1**

# (12) EUROPEAN PATENT SPECIFICATION

(45) Date of publication of patent specification: **30.01.91**

(51) Int. Cl.⁵: **G 06 F 12/08,** G 06 F 9/38

(21) Application number: **85105042.7**

(22) Date of filing: **25.04.85**

(54) Control means in a digital computer.

(30) Priority: **27.04.84 US 604758**

(43) Date of publication of application:
**30.10.85 Bulletin 85/44**

(45) Publication of the grant of the patent:
**30.01.91 Bulletin 91/05**

(84) Designated Contracting States:
**DE FR GB IT**

(56) References cited:
**EP-A-0 106 667**
**GB-A-2 016 753**
**US-A-4 156 906**
**US-A-4 217 640**

**IBM TECHNICAL DISCLOSURE BULLETIN, vol.
10, no. 2, July 1967, pages 125-126, New York,
US; ANDERSON et al.: "Instruction prefetching
interlock"**

(73) Proprietor: **Bull HN Information Systems Inc.
Corporation Trust Center 1209 Orange Street
Wilmington County of New Castle Delaware
(US)**

(72) Inventor: **Edgington, Gregory C.
4916 Torrey Pines Circle
Glendale Arizona 85308 (US)**
Inventor: **McCarthy, Daniel M.
4031 W. Villa Rita
Glendale Arizona 85308 (US)**

(74) Representative: **Bardehle, Heinz, Dipl.-Ing. et al
Patent- und Rechtsanwälte Bardehle-
Pagenberg-Dost-Altenburg & Partner
Galileiplatz 1 Postfach 86 06 20
D-8000 München 86 (DE)**

# Description

## Background of the invention

The present invention relates to electronic and digital computer systems. More particularly, it relates to control elements within the CPU of such computer systems.

An aim of improved computer systems is the enhancement of the data throughput of the system. To this end, high speed cache memories have been provided which, in the interest of greater speed of operation, are operated on a store-into basis. That is, data which has been extracted from the main memory and manipulated or modified by the CPU is stored in the cache memory only; the modified data is ordinarily not returned to the main memory except under special circumstances. As noted, for example, in the US-patent 4,695,951 (EP—A—0 131 277) the computer system may include two or more CPUs operating with the one shared main memory. In such a system, the latest version of a data element may reside only in the cache memory of one of the CPUs. As noted in the aforementioned US-patent 4,695,951, means are provided for rendering direct access to the data in the cache associated with one CPU by demand from another CPU in the system.

Again, in the interest of enhancing the throughput of data in the computer system, the system is operated in accordance with a pipeline protocol. That is, a series of instructions are applied sequentially to the input of the system in successive cycle time slots of a computer without having to wait for the completion of the previous routine. Thus, with, for example, five time slots in the pipeline, there may be five different instructions simultaneously in successive stages of completion.

In the system set forth in the aforementioned US-patent 4,695,951, whenever data is transferred into or out of the cache memory, a whole block of data is transmitted. In the exemplary embodiment, each block of data is comprised of eight words of data, while the CPU operates on as much as a double word or on as little as a single byte of an addressed word; the entire block of words including the addressed word is transferred for storage into the associated cache memory. Transfers of data from the CPU to the cache memory require considerably less time, usually, than the transfer of data from the main memory. This requires control of the data flow to assure that modified data is properly merged with the remainder of the block of data extracted from the main memory.

Numerous prior art is known which deals with data processing systems having a cache and a main memory and appropriate control means for handling the data block transfer.

For example, the U.S. patent 4,156,906 discusses the problem that if a block transfer has been initiated from the main memory to the cache it would be possible to receive more than one request specifying fetching data from the same block of information. An embodiment is disclosed whereby a subsequent memory command accessing the same memory block is suspended until the data being obtained from the main memory after the previous memory command is in the cache.

U.S. patent 4,217,640, as in the previously described reference, relates only to memory (specifically cache) commands and discusses the problem that in such systems it would be possible that the cache receives a read command which specifies information also requested by the previous read command, while a control directory of the cache indicates that the oeration which has been initiated is still pending, so that the processor receives a signal to stop its operation in the case where the information requested is needed immediately. An embodiment is disclosed whereby the cache unit comprises a buffer for storing read commands, each including an address. Comparison means detect whether a subsequent read command relates to block addresses in the cache still in processing by earlier commands, and supply a stop signal to stop further processing of the command by the cache unit and the operation of the processing unit. If a match occurs as a result of the comparison, the new command is suspended until the match no longer occurs; it is not changed or aborted.

According to the patent specification GB—A—2,016,753 instructions being read out are sent to an instruction register coupled to a decoder in an instruction pre-processing unit which precodes and queues a plurality of instructions for sequential presentation to an execution unit, and which includes a plurality of instruction addressable general registers which can be utilized for temporary data storage, and an interlock mechanism to detect when an instruction as being decoded requires use of a general register for address modification, but which general register has not yet received new data by execution of an instruction awaiting execution in the queue of instructions, so that the operation of the instruction decoder is blocked if there is a match. This piece of prior art thus deals with general registers and relates to only instructions performing write operations. The instructions as well as designations of the registers to be affected thereby are stored in an instruction queue. When a subsequent instruction is received on which pre-address preparation is to be performed, such address preparation is suspended if the registers to be involved in such address preparation are identifed in the instruction queue.

While the above mentioned prior art deals with certain aspects of memory-cache data transfer control, there are substantial differences with respect to the structure and function of the instant invention which relates to apparatus for determining the potential validity of data to be processed in a pipelined CPU of the type in which data, as processed, are immediately entered into the cache and in which instructions and their associated operands are prepared and entered into a pipeline queue; wherein a store holds the operand address and function information for each instruction entered into the queue which is to access the cache; wherein prior to entry of each new instruction into the queue, the store is searched to determine whether the operand address of such instruction is already in the store (and, therefore, also belongs to an instruction already queued); and wherein, if the search is positive, the corresponding function information is analyzed to determine whether admitting the instruction into the queue might produce invalid data.

Thus, the instant invention provides different control means in a computer for cache transactions of data which may cause conflict situations thereby impairing the overall system throughput efficiency.

## Summary of the invention

It is, accordingly, an object of the present invention to provide an improved computer system with enhanced throughput.

It is another object of the present invention to provide an improved computer system as set forth which includes means for controlling data flow in a pipeline computer configuration.

It is a further object of the present invention to provide, in a computer system as set forth, means for controlling cache transactions in a pipeline computer configuration.

It is yet another object of the present invention to provide, in a computer system as set forth, means for controlling cache transactions in a pipeline computer system having a plurality of processor units with access to common data.

In accomplishing these and other objects, there has been provided, in accordance with the present invention, a directory unit in which may be stored address and control data relating to a plurality of cache transactions during the interval between the initiation of the individual ones of the transactions and the completion thereof. The directory includes the capability of comparing the pertinent data relative to subsequent proposed transaction with the corresponding data stored in the directory to determine if a procedural conflict exists, and, in the event of a conflict to issue control signals to resolve the conflict. Additionally, the address and control data stored in the directory is access to control the storage of a completed CPU operation into the appropriate location in the cache memory.

## Brief description of the drawings

A better understanding of the present invention may be had from the following detailed description when read in the light of the accompanying drawings, in which:

Figure 1 is a block diagram of a computer system of the type in which the present invention may be embodied;

Figure 2 is a block diagram of a CPU of the type suitable for use in the computer system shown in Figure 1;

Figure 3 is a block diagram of the ports component of the structure shown in Figure 2;

Figure 4 is a block diagram of a store directory embodying the present invention; and

Figures 5 and 6 are block diagrams illustrating in greater detail certain features of the store directory shown in Figure 4.

## Detailed description

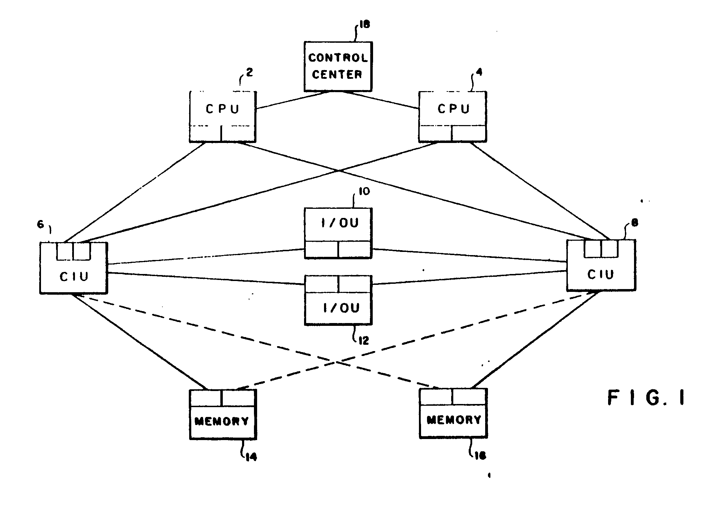

Referring now to the drawings in more detail, there is shown in Figure 1 a computer system which includes a first central processing unit (CPU) 2 and a second CPU 4. There is also provided a first central interface unit (CIU) 6 and a second central interface unit (CIU) 8. The first CPU unit 2 has means for communicating with the first CIU 6 and the second CIU 8.

Similarly, the second CPU 4 has means for communication with the first CIU 6 and the second CIU 8. One or more input/output units (I/O U) 10 and 12, respectively, are provided. These units basically provide a multiplexed interconnect between the CIUs 6 and 8 and the I/O peripheral units of the system. A first memory unit 14 is connected to be associated with the first CIU 6. Simimlarly, a second memory unit 16 is connected to be associated with the second CIU 8. In such a system the central processor units 2 and 4 perform their usual computational manipulation of data.

Data is received from or transmitted to the input/output units 10. The central interface units 6 and 8 provide among other things a traffic management function between the central processor unit and the input/output units and the associated memory units.

The memory units 14 and 16 provide a storage place for original data as well as data which has been manipulated by the CPUs. In the system herein set forth, it will be noticed that each of the central interface units 6 and 8 may be in direct communication with either of the two central processor units 2 and 4. Both of the central interface units are in communication with the input/output units 10 and 12. Additionally, in the exemplary embodiment of the present invention, each of the two CIUs has a capability of communicating directly with the memory unit associated with the other half of the system. Thus it may be seen that there is an intercommunication capability between the two halves of the illustrated system.

Because of that intercommunication capability, it is necessary that the several components of the system all be synchronized with respect to each other. To this end, there is provided a control center 18. The control center 18 is, in effect, a further CPU whose function is to define the basic control operations for the system, including the synchronization of the operating units.

The structure illustrated in Figure 1 is set forth for the purpose of illustrating the environment in which the present system operates.

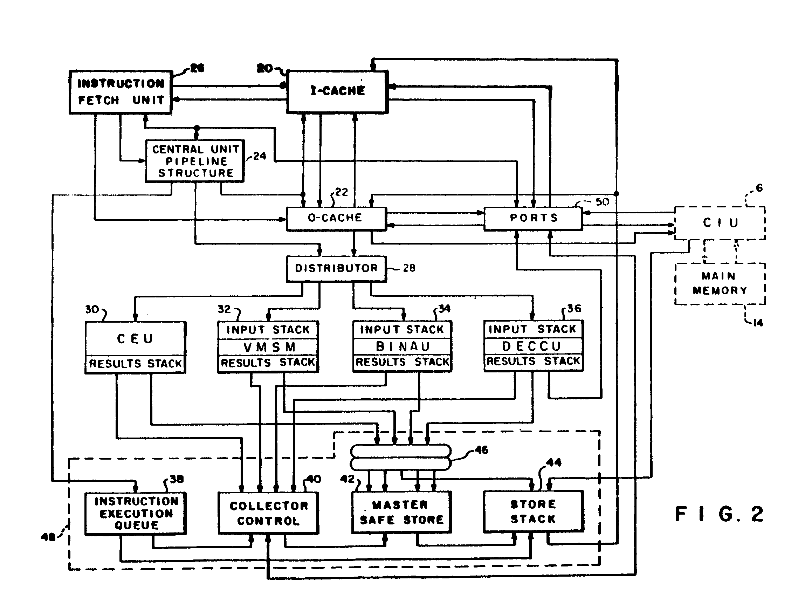

In Figure 2 there are shown the major components, or subsystems of a CPU such as the CPU 2 shown in Figure 1; the other CPU 4 is identical in structure. As usual the CPU 2 includes a cache memory. In the exempary embodiment illustrated in Figure 2 that cache memory is illustrated as being, in two parts or units, one part being an instruction cache 20 hereinafter identified as an I-cache. The other part of the cache memory is illustrated as being an operand cache 22, hereinafter identified as an O-cache. As is more fully set forth in the US-patent 4,471,432 (EP 106,664), a central unit pipeline structure (CUPS) 24 controls the overall operation of the processor 2. An instruction fetch unit 26 supplies or transmits the address of instruction words to the instruction cache 20 and/or the operand cache 22. In response to the receipt of an instruction address by the instruction cache from the instruction fetch unit 26, an instruction double word is transmitted from the cache 20 or 22 to the instruction fetch unit 26. The instruction fetch unit 26, in turn, stores or accumulates a series of instructions in an instruction stack which is a part of the instruction fetch unit 26.

The central unit pipeline structure (CUPS) 24 obtains the instructions in program order from the instruction stack of the instruction fetch unit 26. The CUPS unit 24 features a five-stage pipeline which, as is more fully described in US-patents 4,695,951 and 4,471,432, processes the instructions obtained from the instruction fetch unit 26 and effects a decoding of the operation code and the formation of an operand address.

As will be described more fully hereinafter, if the required data is found in a cache memory unit, such data is extracted and applied through a distributor 28 to the appropriate one of several execution units.

In the exemplary embodiment of the computer system, the several execution units include first, a central execution unit 30, the architecture of which is particularly adapted to performing basic computer operations, such as simple moves, adds, subtracts, etc. The central execution unit (CEU) 30 is further characterized in that it executes operations on an as-received basis. A second execution unit is identified as a virtual and security manager unit (VMSM) 32. This unit executes instructions relating to virtual memory, security and special instructions that are peculiar to a secure operating system. A third execution unit is identified as a binary arithmetic unit (BINAU) 34. The architecture of this unit is particularly oriented towards the execution of binary arithmetic instructions such as multiply, divide, and floating point instructions. A forth execution unit, is, in the exemplary embodiment, identified as a decimal/character execution unit (DECCU) 36. This unit is particularly adapted to the execution of decimal arithmetic alpha-numeric and bit string instructions.

Each of the execution units 32, 34 and 36 is provided with an input stack for the accumulation and sequential issuing of input instructions and data for the respective execution units. Similarly, each of the execution units 30, 32, 34 and 36 is provided with a results stack for the accumulation and sequential issuing of the results of the execution of the respective execution units. An instruction execution queue 38, under control of the central unit pipeline structure 24 stores execution queue words in program order. A collector control unit 40 uses the instruction execution queue words to control the order of reading out of the resultant data in the result stack of each of the execution units 30, 32, 34 and 36. These execution results may, under such control, be stored either in the master safe store 32 or the store stack unit 44 through the operation of a selected switch arrangement 46. The instruction execution queue unit 38, the collector control unit 40, the master safe store 42, the store stack 44, and the selector switch 46 are subcomponents of a unit identified as a collector 48.

All of the foregoing has been premised on the finding of the required data in the cache structure 20 or 22. In the event that the required data is not found in the cache unit, the main memory 14 is accessed through the CIU 6 in order to obtain the required data. The CIU is, in turn, accessed by the cache units 20 or 22 through a ports unit 50. When so obtained the data is stored in the cache structure. The operation of the CPU then proceeds as herebefore set forth. When the selected data has been acted upon by the appropriate one or more of the execution units, the data is restored to the cache structure by the store stack 44.

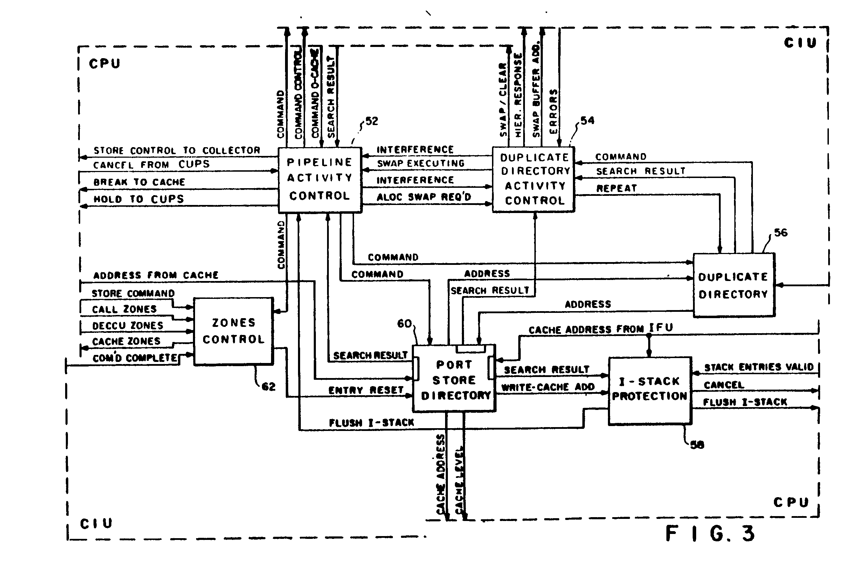

In Fig. 3 there is shown a fundamental block diagram of the ports unit 50 referenced in Fig. 2. The primary function of the ports unit 50 is to provide interface control between the CPU and the CIU. There are two major sequences that the ports unit provides in order to accomplish the foregoing control. The first of these relates to the pipeline activity of the CPU and its associated cache. Secondly, the ports unit maintains a directory which is a duplicate of the cache directory and is referred to herein as the duplicate directory.

In accomplishing these control functions, the ports unit includes a number of subunit components. A first of these subunit components is identified as a pipeline activity control 52. A second such subcomponent is identified as the duplicate directory activity control 54. Additionally, there is provided a duplicate director 56, an I-stack protection unit 58, a port store directory 60 and a zones control unit 62. Each of these component units is illustrated as having a number of lines going to and from the units. These lines, rather than indicating physical conductors are representative of the types of signals applied to and received from the component unit. Also, there is a plurality of dashed lines labelled, respectively, CIU and CPU. These lines indicate the major components of the computer system which are not included in the ports unit 50 and with which the port unit components communicate.

The pipeline activity control unit 52 is a logic circuit which provides a principle control interface between the ports unit 50 and the CPU. The pipeline activity control unit 52 receives command signals from the O-cache. Since on occasion both the O-cache and the I-cache will be searched in the CPU operation, the pipeline activity control unit 52 must also respond to COMMAND signals involving the I-cache. Inasmuch as the search of the I-cache will be simultaneous with the search of the O-cache, the command from the I-cache will be identical to that from the O-cache. There will, however, be included in the COMMAND signal from the O-cache a signal indicative that it is either an O-cache-only search involved or a dual cache search. Also received from the caches will be a signal indicative of the result of the search in the caches; that is, a HIT or a MISS. The pipeline activity control unit 52 correlates these command and SEARCH RESULTS signals from the CPU with information received from other units, as will be more fully described hereinafter, and provides command and control signals to other components in the ports unit 50 as well as sending command control signals to the associated CIU.

Additionally, the pipeline activity control unit 52 sends control signals to the associated CPU. For example, a STORE control signal is sent to the collector 48 of the CPU as a result of a cache search for a STORE, or WRITE, command. The unit 52 also provides a BREAK control signal for the cache and/or a HOLD control signal to the CUPS unit 24. These later two signals are indicative that in the course of the pipeline operations a succession of procedures are called for which will result in the latter procedures producing erroneous results. Accordingly, the BREAK and/or HOLD signals provide a control to the CPU which temporarily stops the operation of the CUPS unit and/or the cache unit to effect a subsequent retry of the indicated procedures when the interfering operations have been cleared.

The pipeline activity control unit 52 also receives from the unit a CANCEL signal. This signal is indicative that, in the CUPS unit, an invalid condition has occurred and all signals in the pipeline subsequent to a particular cycle should be cancelled. The CUPS unit will, of course, restart the pipeline.

A duplicate directory activity control unit 54 provides control signals resulting from searches of the duplicate directory 56. In the CPU, each of the cache units 20 and 22 are in the form of a data array and a directory array. As is conventional, the directory array is a record of the address information for data stored in the associated data array. When the cache units are searched, it is the directory that is seached for the address of the data sought. In the ports unit illustrated in Fig. 3, the duplicate directory is, in fact, a duplicate of the directory array of both of the cache units in the CPU. The duplication of the directory in the ports unit allows for a much more rapid access to search information in that the duplicate directory may be searched independently of the directories in the cache units and simultaneously therewith. The duplicate directory receives a command signal from the pipeline activity control unit 52 representing command control relative to the operation of the CPU. The duplicate directory 56 may also receive COMMAND and ADDRESS signals from the CIU relative to transactions originating outside of the associated CPU, for example, from the other of the two CPUs illustrated in Fig. 1.

As illustrated in US-patent 4,695,951, the two CPU's may operate on the basis of a shared memory and may be operating on an identical data block. The CIU provides the hierarchy control for maintaining an orderly transfer of data between CPU's and the main memory. As will also be seen in more detail hereinafter the duplicate directory 56 also receives address information from the port store directory 60. When the duplicate directory has received a command from either the pipeline activity control or the CIU representing a hierarchy control and address signal, a search of the entries in the duplicate directory is made to determine if the addressed block of information is resident in the associated cache memory.

The duplicate directory 56 then generates a HIT or MISS signal identified as search result and transmits that signal to the duplicate directory activity control 54 along with a command signal indicative of the nature and source of the command signal that initiated the search. The duplicate directory activity control unit 54 then correlates the COMMAND and SEARCH RESULT signals from the duplicate directory 56 with the SEARCH RESULT signal from the port store directory 60 and the other signals such as INTERFERENCE and ALLOCATE SWAP REQUESTED signals from the pipeline activity control unit 52 to determine if the indicated transaction may be carried out as a matter of course, or if there is a conflict involved. Inasmuch as the duplicate directory 56 is used primarily to interrogate the content of the cache for hierarchy requests from the CIU, the duplicate directory activity control unit 54 provides a hierarchy response signal back to the CIU which will be in the nature of a REQUEST DONE signal. Alternatively, if data is to be swapped out of the associated cache, then the unit 54 will issue a SWAP signal to the CPU to initiate the swap routine. Simultaneously therewith the unit 54 will send a signal indicative of the SWAP BUFFER ADDRESS to the CIU. As was noted in the aforementioned US-patent 4,695,951, the CIU includes a swap buffer as an intermediate store unit during swap operations. When a swap operation has been indicated, the duplicate directory activity control unit 54 provides a SWAP EXECUTING signal to the pipeline activity control unit 52.

It will sometimes occur that a legitimate transaction will require storage in the cache of a new block of data at an allocated storage address therein, and the data already stored at that address is valid information. Since, in a store-into-cache arrangement, the only copy of such a valid block of data is the one in the cache, that data must be swapped back to the main memory before the new data can be stored into the cache. Such a requirement would be one of the commands received by the pipeline activity control unit 52 from the O cache. This would, in turn, result in an ALLOCATE SWAP REQUIRED signal from the pipeline activity control unit to the duplicate directory activity control unit 54. The duplicate directory 56 would then initiate the swap routine with the CPU and the CIU while the pipeline activity control unit 52 effects a break in the procedure to the cache to allow the swap operation to be completed first. The pipeline activity control unit 52 and the duplicate directory activity control unit 54 notify each other if there has been an interference detected by either which would prevent a valid execution of the indicated controls. Similarly, the CIU will notify the duplicate directory activity control unit 54 of any errors in the data or procedure which it has detected and which would necessitate interrupting the ongoing procedures. If such ERRORS or INTERFERENCE indication has been received by the duplicate directory activity control unit 54, the unit 54 will indicate to the duplicate directory 56 that the search command should be repeated. On the repeat search, the interfering condition should have been alleviated.

In the I-fetch unit 26 of Fig. 2, there is an instruction stack wherein there is stored instructions which have been prefetched from the cache units 20 and 22. Between the time that the instructions are prefetched from the cache units and stored in the instruction stack, and they are called forth and used by the CPU, there may have been changes in the requested information as a result of an intervening activity of the CPU. On the other hand, the instruction fetched from the cache may relate to information which is already in the pipeline procedure. In either case, it is possible for the continuation of the process with those instructions lodged in the instruction stack for the computer system to provide erroneous transactions.

To avoid such an occurrence, there is provided the I-stack protection unit 58. In the I-stack protection unit 58, there is a register for each location in the I-stack. The cache address from the I-fetch unit is compared, as will be seen with the discussion of the port store directory 16, to determine if an interfering activity exists which would invalidate the proposed activity with respect to the questioned instruction. If such an interfering activity is detected, the I-stack protection unit 58 will transmit, depending upon the nature of the interfering activity, a cancel signal to the I-fetch unit to cancel the selected entry in the I-fetch unit. Alternatively, if the cache had received a WRITE command to store data to a given address in the cache, that address is also communicated to the I-stack protection unit for comparison with the content of the I-stack. If a HIT is encountered, the I-stack protection unit 58 will transmit a FLUSH I-STACK signal to the I-fetch unit to clear out all instructions subsequent to the one on which the HIT was encountered. The FLUSH I-STACK signal is also transmitted to the pipeline activity control unit 52 which in turn transmits a HOLD signal to the CUPS unit to hold up the operation thereof until the I-stack can be flushed.

The port store directory 60, as will be discussed in more detail hereinafter, includes primarily a register for address information for each item that has been entered in the pipeline for processing and which process has not yet been completed. The port store store directory 60 receives address information directly from the cache and it receives a command signal from the pipeline activity control unit 52. Under control of the command signal from the pipeline activity control unit 52, the port store directory stores the address information in the suitable location within the port store directory. In an exemplary embodiment, the port store directory register comprises a four-by-four entry array. That is, there were four levels with each level containing four sets. Each entry in the exemplary embodiment comprised a 40-bit word which includes 16 bits of the real memory address, an 11-bit cache address, a 1-bit cache identifier (which identifies whether the address is in the O-cache or the I-cache), a 2-bit cache level signal (to indicate which level of the cache the address represents), a 2-bit swap identification signal (which indicates the address in the swap buffer if a swap is indicated), and eight operational flags that indicate what operation has been called for in connection with that address. The 16 entries in the port store directory register should be adequate to accommodate all finished operations scheduled in the pipeline.

Whenever an operational entry is made into the pipeline of the CUPS unit 24 (Fig. 2), the address associated therewith is transmitted to the port store directory 60 and the command from the pipeline activity control unit 52 indicates that the register of the port store directory 60 should be searched to determine if there is another unfinished operation in the pipeline which refers to the same address. If, after such comparison, no identical address is found in the port store directory, then the address of the new entry is entered into the array of the port store directory. If, on the other hand, there should be found in the port store directory another entry directed to the same address as the one in question, that HIT would be evaluated to determine if the new entry would be compatible with the former entry or would be in conflict therewith. If no conflict would result, the new entry is treated as a separate MISS entry. If, on the other hand, a conflict would result, then a control signal is sent to the CPU to provide the necessary corrective action to avoid the conflict which would cause erroneous data being entered into the computer system.

It will be recalled that address information from the I-fetch unit 26 (Fig. 2) is applied to the input of the I-stack protection unit 58. The same address information is applied to an input of the port store directory 60. That address is also compared with the cache address information already lodged in the port store directory 60. If the same address is not found in the port store directory, the port store directory sends as a search result a MISS signal to the I-stack protection unit 58. If, on the other hand, the same address is found, the HIT, is evaluated to determine if the HIT would result in a conflict which would, in turn, produce erroneous results in the computer system. If such a conflict would result, then the SEARCH RESULT signal transmitted to the I-stack protection unit 58 would so indicate and the I-stack protection unit 58 would then transmit its FLUSH I-STACK signal.

Similarly, when signals are received from the CIU through the hierarchy structure to the duplicate directory 56, indicating a command and an address from the CIU, the address is compared with the addresses already stored in the duplicate directory to determine if that block of data is already stored in the cache memory. Further, the duplicate directory 56 transmits the address to the port store directory to determine if that address is the same as an address currently in the pipeline but as yet unfinished. The search results of that address are transmitted via the port store directory 60 to the duplicate directory activity control 54. If the address is not found in the port store directory, then a MISS is transmitted as a search result. If a HIT is encountered, the HIT is evaluated to determine if the continuation of the process would produce a conflicting invalid result. If so, the appropriate instruction is issued through the duplicate directory activity control 54 either, to repeat the request from the duplicate directory 56 after the conflict has been resolved, or an INTERFERENCE signal is transmitted to the pipeline activity control unit 52 to take corrective action in the CPU or the CIU as required.

Another function of the port store directory 60 is to store the address and control information for a CPU activity while the CPU is in the process of manipulating the selected data. When the CPU has completed its manipulation of the data, the result of that manipulation is stored in the collector 48 of the CPU. When the data in the collector 48 is to be returned to the cache for storage, the command is issued to the port store directory 60 which issues the cache address and the cache level into which the data from the collector is to be stored. At the same time, when the data from the collector is stored into the cache, the port store directory 60 also transmits the address of such data to the duplicate directory 56. Thus the duplicate directory may maintain its identity with the directory of the cache into which the data was stored. When the command to the port store directory 60 includes a WRITE into the cache memory, the cache address is also transmitted to the I-stack protection unit 58. The I-stack protection unit 58 effects the comparison with the data stored therein to determine if there is in the I-stack an instruction that would tend to conflict with the current write instruction. If such a conflict exists the I-stack protection unit then issues the control signals to the pipeline activity control unit and to the I-fetch unit to effect the necessary remedial action.

In the exemplary embodiment, data is transferred from the main memory to the cache memory in blocks of eight words. Each cache address location is the location of a double word address or two words out of the eight word block. Thus, each address stored in the port store directory 60 represents a double word. The operation of the CPU may involve substantially less than the entire double word. In fact, it may involve as little as one or more bytes of one of the words of the double word. In the course of events, the eight word block embodying that address may be called from the main memory or transferred from the cache of another CPU. It is characteristic of the CPU in such a computer system that it does not wait for the entire eight word block to be transferred into cache before it effects its manipulation of the data at hand.

Since the transfer of data from the main memory is a very slow process, relatively, it is possible for the manipulated data from the CPU to be entered into the cache before the data from the main memory has been lodged therein. If that were to happen, then the manipulated data stored into the cache by the CPU would be overwritten by the old data from the main memory and the manipulated or new data would thereby be lost. To prevent such a loss, the zones control unit 62 stores a set of zone control signals for each entry in the port store directory 60. Each address in the port store directory refers to a double-word entry for the cache. Each word is formed of four bytes or zones. Thus, each double-word would include eight zones or bytes. Each zone of the double-word is represented by a one bit signal stored in positional relationship in the zones control unit.

As shown in Fig. 3, the zones control unit receives a store command from the CPU indicating that the CPU is instructed to effect a store operation into a given address in the cache. The zones control unit 62 receives the specific zone signals from the collector 48 of the CPU or directly from the DECCU unit 36 of the CPU. The zone control signals indicate which of the zones or bytes of the double word are reserved for manipulation by the CPU. These signals comprise an inhibit signal for those zones for the entry of data from any other source. When the transaction has been completed a COMMAND COMPLETE signal will be received from the CIU whereupon the zones control unit will clear that entry from its stack. The same signal will result in an ENTRY RESET signal being transmitted to the port store directory 60. This ENTRY RESET signal has the effect of resetting the appropriate flag signal which is part of the data stored in the port store directory associated with the particular entry.

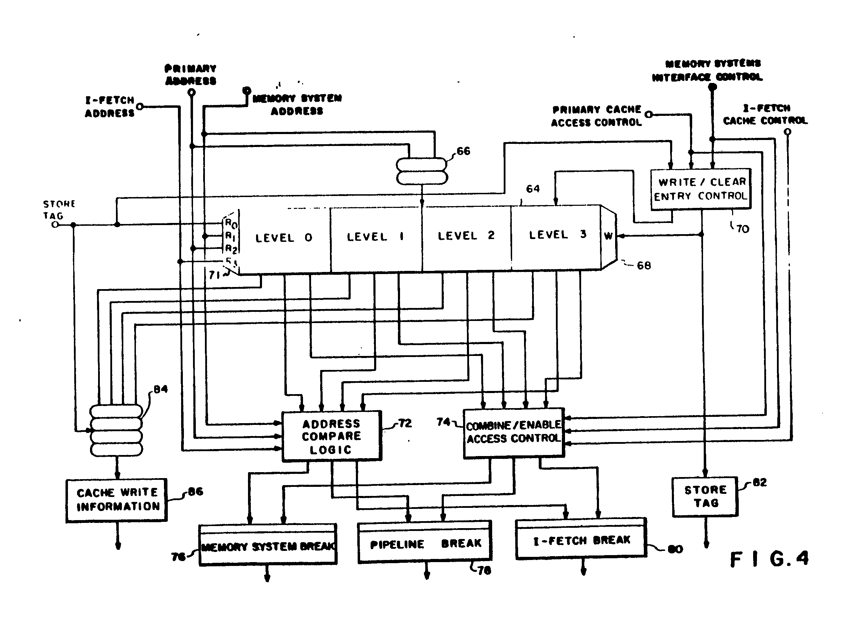

Fig. 4 is a block diagram showing in greater detail of the port store directory system 60. The port store directory includes a memory array 64. In the exemplary embodiment, the memory array is arranged in four levels designated in Fig. 4 as Level 0, Level 1, Level 2 and Level 3. Each level has therein four entry sets, structuring the memory array as a sixteen-entry unit. Each entry in the port store directory memory array 64 includes a cache address (the least significant portion of a physical address), a real page number (the most significant portion of a physical address), a cache identifier (to identify whether the associated cache is the instruction cache or the operand cache, a cache level number a swap buffer address, and a plurality of flags defining the purposes of the entry. Address information from the CPU is applied as input signal through the input terminal identified as PRIMARY ADDRESS in Fig. 4 to the input of a selector 66. Similarly, address information from the CIU, representing address information from the main memory or from a CPU other than the primary CIU, is applied as input to the terminal identified as MEMORY SYSTEM ADDRESS and applied as a second input to the selector 66.

The array 64 includes a WRITE logic 68 which is controlled from a write/clear entry control unit 70. The input signals to the write/clear entry control unit 70 includes a STORE TAG signal which is applied to the port store directory as a part of a command signal applied thereto. The STORE TAG signal is a four-bit signal which identifies the LEVEL and SET of each entry in the array 54. Other inputs to the write/clear entry control unit 70 include access control signals from the associated CPU identified as the PRIMARY CACHE ACCESS CONTROL. A further input signal to the unit 70 is identified as MEMORY SYSTEM INTERFACE CONTROL and represents the control signals from the CIU thereby, representing control information either from the main memory or from the secondary CPU. The write/clear entry control unit 70 provides output signals to the array 64 to control the source selection of the information to be written, i.e., from the primary cache or from the memory system, as well as the location and timing of the entries to be made from the selector 66.

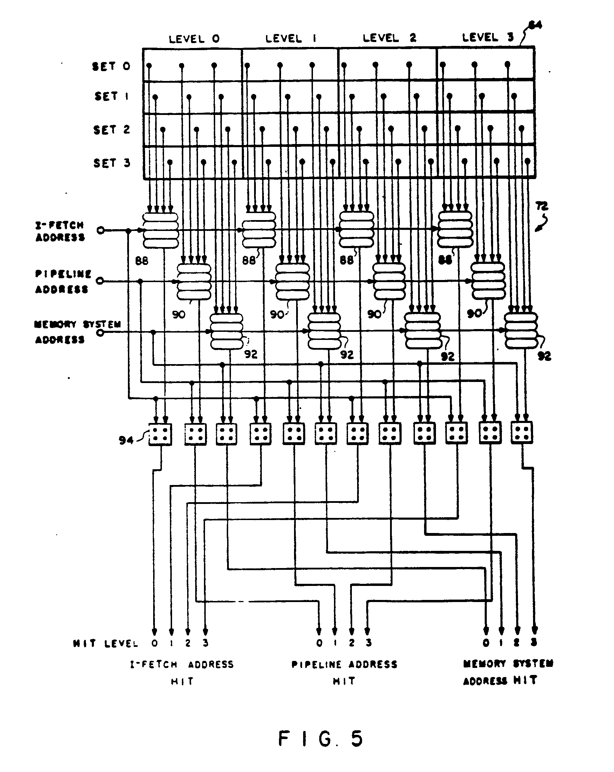

When, as previously mentioned, activity involves either the pipeline activity control unit (representing activity within the associated CPU), the duplicate directory, (representing activity from the CIU or memory system), or the I-fetch unit (as a new item to enter into the operational procedures of the CPU), the address and other pertinent data are referred to the port store directory. A portion of the address signal from the I-fetch unit, from the primary address, from the memory system address as well as the STORE TAG signal are applied, selectively, as input signals to a READ logic 71 to effect the selective reading and from the memory array 64, the addressed entry. The address of the new entry is compared on a set- associative basis with the entries read out from the memory array 64 of the port store directory 60. The address comparison is effected by means of an address compare logic unit 72 which is shown in more detail in Fig. 5.

If the address of the new data is not found in the array 64, that new data is entered into the array through the selector 66 and under the control of the write/clear entry control unit 70. If, on the other hand, the identical address is found in the memory array 64, the flag information associated therewith is evaluated to determine if the continuation of the proposed instruction would result in an inaccuracy or a conflict. If no such conflict or inaccuracy would result, the procedure continues uninterrupted. If, on the other hand, the continuatuon of the procedure would, in fact, produce a conflict or an inaccuracy, then a BREAK signal is transmitted to the appropriate, interrogating unit.

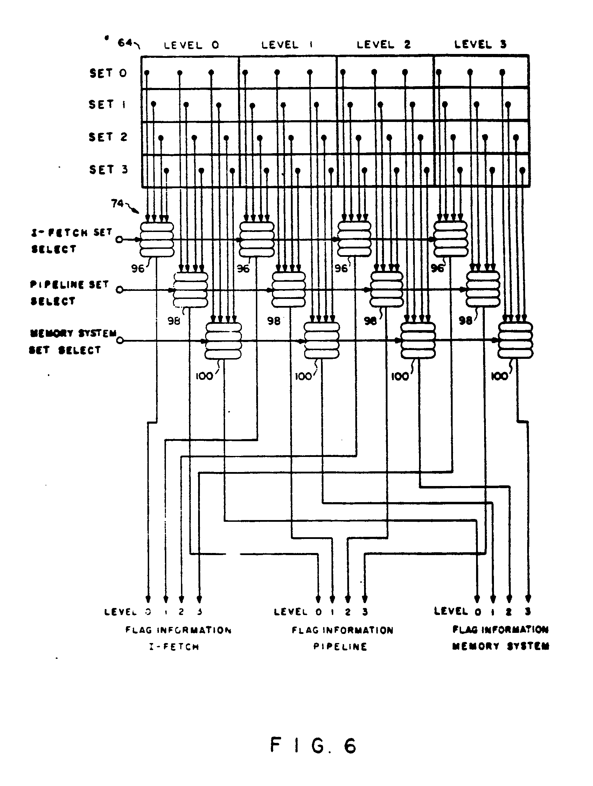

The appropriate flag signals are selected from the array 64 by the combine/enable access control unit 74. This unit is shown in more detail in Fig. 6. The address HIT or MISS information is applied, selectively, to the input of a memory system break logic 76, a pipeline break logic 78 or an I-fetch break logic 80. The appropriate one of the break logic circuits is selected by operation of the signals applied to the address compare logic unit 72 from the interrogating input address signals and by operation of the interrogating input control signals applied to the combine/enable access control 74. The BREAK or NO-BREAK signals from the units 76, 78 or 80 are applied to the corresponding units to effect a delayed repeat of the initiating request until such time as the conflict, if any, has been resolved.

The STORE TAG signal which, as was previously noted, identifies the address of each entry in the array 64, and is applied to the input of the write/clear entry control unit 70 to effect such control. After the effective entry control, the STORE TAG signal is stored in a store tag unit 82. When the collector 48 (Fig. 2) has the manipulated data from the CPU ready to be restored to the cache memory, the STORE TAG signal corresponding to that data element is called out of the store tag storage unit 82 and applied to the READ input 71 of the array 64 to call out the address information from the array 64 for transmittal to the cache. The address from each level of the array 64 is supplied to a selector 84. The STORE-TAG signal also applied to the selector 84, effects the selection of which of the level signals will be transmitted through the cache write information buffer 86 to the cache to effect the storage of the collector information in the proper location in the cache system.

In Fig. 5 there is shown more details of the address compare logic 79 in its association with the port store directory array 64. The array 64 is shown as including four levels of data storage, identified in the drawing as Level 0, Level 1, Level 2 and Level 3. Each of the levels includes four sets of information with the sets being identified as Set 0, Set 1, Set 2 and Set 3. As may be seen, there are three output selectors associated with each level. For example, in association with Level 0 there is a first selector 88, a second selector 90 and a third selector 92. Each of the selectors 88, 90 and 92 have inputs connected, respectively, to accept, individually, the content of the four individual sets of data within the associated Level 0. The selector 88 is connected to respond to I-fetch input controls and address signals. The selector 90 is connected to be controlled by the PIPELINE ADDRESS signals which are the signals corresponding to the internal CPU with which the port store directory is associated. The selector 92 is connected to respond to MEMORY SYSTEMS ADDRESS signals which represent the address signals coming from the CIU.

Similarly, the Level 1 portion of the array 64 has associated therewith three selectors which correspond, respectively, to the selectors 88, 90 and 92 associated with Level 0 and are similarly controlled. Again, there are three selectors each associated, respectively, with Levels 2 and 3 of the array 64. These selectors are also connected to be controlled in the same manner as the corresponding selectors 88, 90 and 92.

Each of the thus recited twelve selectors is connected, respectively, to one input of the associated one of twelve corresponding comparators 94. The output of the selector 88 is connected to one input of a first one of the comparators 94 where the selected output signal thereof is compared with a corresponding I-fetch address signal. If an identity of the address from the I-fetch unit and the address stored in one of the sets of the Level 0 of the array 64 occurs, the output of the first comparator 94 will score a HIT.

The selector 90 has inputs from each of the sets of the Level 0 of the array 64 and is arranged to respond to the PIPELINE ADDRESS signals. The output of the selector 90 is applied as a first input to a second one of the comparators 94 where it is compared with cache address signals from the associated CPU. Again, if an identity of address is found between the cache address signal and one of the addresses from the selector 90, the second comparator 94 scores a HIT. The output of the third selector 92 is applied as one input of a third one of the comparators 94 where it is compared with MEMORY SYSTEM ADDRESS signals received from the CIU. Here, too, if an identity of address is found between the address signals of the CIU and one of the addresses in the selector 92 the comparator scores a HIT. It may be seen that there are also three comparators for comparing the output of the corresponding selectors and the I-FETCH ADDRESS, the PIPELINE ADDRESS and the MEMORY SYSTEMS ADDRESS, associated with each of Levels 1, 2 and 3.

As illustrated in Fig. 5, the first comparator associated with each of the Levels 0, 1, 2 and 3, respectively, are applied as input signals to the I-fetch break logic unit 80 shown in Fig. 4. Similarly, the output of the second comparator 94 associated with each of the Levels 0, 1, 2 and 3 is connected, respectively, as input signals to the pipeline break logic unit 78 shown in Fig. 4. Again, the output of the third comparator 94 associated, respectively, with each of the Levels 0, 1, 2, and 3, is connected as input signal to the memory systems break logic unit 76 shown in Fig. 4. The I-fetch address, the pipeline address, and the memory systems address, applied as control input to the selectors 88, 90 and 92 as well as to the comparators 94 include, in the exemplary embodiment, a two-bit signal which selects which of the sets from the several levels will be enabled and passed on to the comparators 94 where the remainder of the address will be compared with the address from the selected set and level.

In Fig. 6, as noted, there is shown in greater detail aspects of the combine/enable access control logic 74. The array is again shown as including four levels of data storage, identified in the drawings as Level 0, Level 1, Level 2, and Level 3. Again, each of the levels includes four sets of information with the sets being identified as Set 0, Set 1, Set 2, and Set 3. As in Fig. 5, so here, too, there are three selectors associated with each level of the array 64. A first selector 96 associated, respectively, with each of the four levels has one input from each of the four sets of the associated level. The selectors 96 are controlled by I-fetch set select signals applied thereto. A second group of four selectors 98 are associated, respectively, with each of the Levels 0—3 and are controlled by pipeline set select signals applied thereto. A third group of four selectors 100 are associated respectively with each of the Levels 0—3 and are controlled by memory system select signals applied thereto.

The inputs to each of the twelve selectors 96, 98 and 100 are identical at each level. That is, each of the selectors 96, 98 and 100 have applied as input signals thereto the flag information from the four sets of the associated level. The output of the four selectors 96 are connected to apply the flag information to the I-fetch break logic unit 80 (Fig. 4). The four selectors 98 have their outputs connected to apply the flag information to the input of the pipeline break logic unit 78 while the four selectors 100 have their output connected to apply the flag information input to the memory systems break logic unit 76.

As indicated in Fig. 4, the several output signals resulting from the address comparison of the structure shown in Fig. 5 and the associated flag information output from the structure shown in Fig. 6 are combined in the break logic circuits 76, 78 and 80 shown in Fig. 4 to effect a decision as to whether or not an address HIT output from the circuit of Fig. 5 would, in fact, create a conflicting situation in the operation of the CPU and, if so, a corresponding BREAK signal is transmitted from the port store directory to the appropriate unit in the CPU or the CIU to effect the necessary break to allow the conflict to be resolved. It should also be noted that if an address HIT is scored in the address compare logic 72 and if there are no flags set in the corresponding output from the circuit of Fig. 6 the address in the array 64 is an invalid address and is scored as a MISS. This occurs because, when the purpose for the entry of the address information in the port store directory array has been accomplished, the flags associated therewith are all reset. This is, in effect, a clearing of that portion of the array 64.

In operation, whenever an instruction occurs which involves addressing the cache memory unit of the associated or local CPU, the physical address, which includes the cache address and the real page number of the addressed data, is transmitted for storage in the array 64. As hereinbefore noted, the information stored in a given entry in the array 64 also includes cache identifier signals, a cache lead number, a swap buffer address and a plurality of flags defining the purpose or function of the entry. In the exemplary embodiment of the present invention, there are eight one-bit flags, positionally arranged to selectively define the operation or operation for which the data was called forth. A part of the address information identifies which set of the designated level in the array is to be addressed.

Once an instruction has been accepted for processing by the CPU, the address of the involved data is loaded into the appropriate address in the array 64. It remains there until the designated operation or operations have been completed.

When a new instruction is presented, either from the local CPU or from the CIU, the address of the related data is compared with the addresses stored in the array 64. If the identical address is found in the array 64, a HIT is scored indicating that the new instruction involves data that is already in the pipeline to be manipulated by the local CPU. That HIT is applied as an input to the appropriate one of the BREAK signal units 76, 78 or 80 where the flag signal information of the stored address is manipulated to determine if a conflict would occur if the new instruction were to be carried out. That is for example, would the instructions require access to data in the cache which is in the process of being modified by the CPU, a condition which would render the result of the latter instruction invalid. Some of the transactions could be carried out without conflict while others as noted above, would ultimately result in erroneous or invalid data being stored in the cache. This would, of course, also result in erroneous data being issued from the computer as an output thereof. If the BREAK logic detects such a conflict, then the BREAK logic unit issues a BREAK signal to the appropriate unit of the computer system to interrupt the progression of the interfering instruction and order a repeat of the instruction when the conflict has been cleared, the operation upon the data in the pipeline has been completed.

If the BREAK Logic units determine that no conflict would occur, then the new procedure is allowed to continue and the appropriate flag is set in the entry in the array.

On the other hand, if, on the comparison of the address of the new instruction with those in the array results in a MISS, the address and control information relative to that new instruction are entered into a designated address in the array 64 where it would remain until the operation indicated by the instruction has been completed. During the time that the data is being operated upon by the CPU, the various registers involve with that operation do not keep track of the address in the cache into which the resultant data is to be stored. Therefore, when the operation has been completed and the resultant data is in the collector, ready to be stored in the cache, the STORE TAG signal from the unit 82 addresses the read control logic 71 of the array 64 to read out the cache address for the data being transferred from the collector to the cache. The extracted cache address is sent to the cache to establish the address therein where the collector data is to be stored.

Thus there has been provided, in accordance with the present invention, in a computer system featuring a store-into-cache protocol and where the CPU is operated on a pipelined program, means for controlling the flow of data through the pipelined procedures for avoiding conflicting transactions in the system and for preserving and timely application of the cache address for manipulated data.

## Claims

1. Control means for controlling the data flow in a computer system having a main memory (14, 16) (MM) and a central processor unit (2, 4) (CPU), said CPU having associated therewith a cache unit (22) (CU) for providing rapid access for said CPU to stored data, said CPU after performing an operation modifying data thereupon performing a further operation to enter said data into said CU; said CPU being of pipeline type wherein instructions and their associated operands are prepared and entered into a queue (in 26) for subsequent execution by the CPU as they emerge from the queue; said CPU having associated therewith said control means which is characterized by:

a store (64) for holding, for said instructions in said queue, a representation of the operand cache unit address of said instruction and function information related to the operation to be performed by said instruction;

a first circuit (72) for determining whether the operand cache unit address ("primary address") representation of each new instruction, immediately prior to its entry into the queue, is the same as a representation in said store (64) and, if said determination is positive, for generating a first signal; and

a second circuit (74) responsive to said first signal for evaluating the function information (flags) in said store (64) which corresponds to said address representation of said new instruction to determine whether execution of said new instruction after entry into said queue might introduce errors in the operand to be processed and for generating second signals representative of such determination.

2. Control means for controlling the data flow in the computer system according to claim 1 to avoid implementation of conflicting instructions in the pipeline, said control means being characterized in that:

said store is a memory array (64) having a plurality of addressable locations; means for storing in said array, at selected address locations, address and function information related to each instruction currently in said pipeline; and in that

said first circuit is means (72) for comparing address information relative to each new instruction with address information in said array to detect the presence of previous instructions still in progress relating to the same data as said new instructions, to produce a HIT signal in the event of address coincidence; and in that

said second circuit is means (74) for evaluating the function information corresponding to a coincident address in said array to determine if implementation of said new instruction would introduce a conflict, said means for evaluating including means to issue a BREAK signal to said computer system in the event a conflict is indicated.

3. Control means for a computer system as set forth in Claim 2 wherein said memory array includes addressable locations which are address related to selected digits of said address information stored therein.

4. Control means for a computer system as set forth in Claim 2 wherein means are provided for receiving said address information relative to said new instructions selectively from said central processor unit or from said memory system.

5. Control means for a computer system as set forth in Claim 4 wherein said array includes a plurality of levels with each level having a plurality of entry sets.

6. Control means for a computer system as set forth in Claim 5 wherein said comparing means includes output selector means (88, 90, 92) associated, respectively, with each of said levels to effect a controlled selection of the address information the associated entry sets.

7. Control means for a computer system as set forth in Claim 6 wherein said comparing means further includes a comparator means (94) connected to compare the selected output address information from said array with said address information of said new instruction.

8. Control means for a computer system as set forth in Claim 7 wherein said output selector means associated with each of said levels includes a plurality of selector units, each of said plurality of selector units being connected to be enable, respectively, by address signals from a different source.

9. Control means for a computer system as set forth in Claim 8 wherein said central processor unit further includes an instruction-fetch unit (26), and wherein said plurality selector units include a first selector unit (88) connected to respond to address information signals from said instruction-fetch unit, a second selector unit (90) connected to respond to pipelined address information signals from said cache memory and a third selector unit (92) connected to respond to address information signals from said memory system.

10. Control means for a computer system as set forth in Claim 9 wherein said means for evaluating includes further output selector means (96, 98, 100) associated, respectively, with each of said levels to effect a controlled selection of said function flag information.

**Patentansprüche**

1. Steuereinrichtung zum Steuern des Datenflusses in einem Computersystem mit einem Hauptspeicher (14, 16) (MM) und einer Zentralprozessoreinheit (2, 4) (CPU), wobei die CPU eine dazugehörige Cache-Einheit (22) (CU) aufweist, um der CPU einen schnellen Zugriff auf gespeicherte Daten zu bieten, wobei die CPU nach einem Durchführen eines Betriebs, der Daten ändert, daraufhin einen weiteren Betrieb durchführt, um die Daten in die CU einzugeben; wobei die CPU von einem Pipeline-Typ ist, bei dem Befehle und ihre zugehörigen Operanden vorbereitet und in eine Schlange (in 26) für eine nachfolgende Ausführung durch die CPU eingegeben werden, wenn sie aus der Schlange auftauchen; wobei die CPU die dazugehörige Steuereinrichtung aufweist, die gekennzeichnet ist durch:

einen Speicher (64) zum Halten einer Darstellung der Operandenadresse der Cache-Einheit der Befehls- und Funktionsinformation, die den Betrieb betrifft, der durch den Befehl durchgeführt wird, und zwar für die Befehle in der Schlange;

eine erste Schaltung (72) zum Bestimmen, ob die Operandenadresse der Cache-Einheit ("erste Adresse") eine Darstellung von jedem neuen Befehl sofort vor seinem Eintritt in die Schlange dieselbe ist wie eine Darstellung in dem Speicher (64) und zum Erzeugen eines ersten Signals, wenn die Bestimmung positiv ist; und

eine zweite Schaltung (74), die auf das erste Signal anspricht zum Bewerten der Funktionsinformation (flags) in dem Speicher (64), der der Adressendarstellung des neuen Befehls entspricht, um zu bestimmen, ob eine Ausführung des neuen Befehls nach einem Eintritt in die Schlange Fehler in dem zu bearbeitenden Operanden einführen könnte, und zum Erzeugen zweiter Signale, die eine derartige Bestimmung darstellen.

2. Steuereinrichtung zum Steuern des Datenflusses in dem Computersystem nach Anspruch 1, um eine Implementierung von Konfliktbefehlen in der Pipeline zu vermeiden, wobei die Steuereinrichtung dadurch gekennzeichnet ist, daß:

der Speicher eine Speicheranordnung (64) mit einer Vielzahl von adressierbaren Orten ist; und eine Einrichtung zum laufenden Speichern einer Adressen- und Funktionsinformation, die jeden Befehl betrifft, und zwar in die Anordnung bei gewählten Adressenorten; und daß

die erste Schaltung ein Einrichtung (72) zum Vergleichen einer Adresseninformation, die relativ zu jedem neuen Befehl ist, mit einer Adresseninformation in der Anordnung ist, um die Anwesenheit vorheriger Befehle zu erfassen, die noch zu erledigen sind und dieselben Daten wie die neuen Befehle betreffen, um ein HIT-Signal in dem Fall einer Adressenübereinstimmung zu erzeugen; und daß

die zweite Schaltung eine Einrichtung (74) ist zum Bewarten der Funktionsinformation entsprechend einer übereinstimmenden Adresse in der Anordnung, um zu bestimmen, ob eine Implementierung des neuen Befehls einen Konflikt erzeugen würde, wobei die Einrichtung zum Bewerten eine Einrichtung enthält, um ein BREAK-Signal zu dem Computersystem in dem Fall auszugeben, wenn ein Konflikt angezeigt wird.

3. Steuereinrichtung für ein Computersystem nach Anspruch 2, wobei die Speicheranordnung adressierbare Orte enthält, die zu gewählten Zahlen der darin gespeicherten Adresseninformation adressenbezogen sind.

4. Steuereinrichtung für ein Computersystem nach Anspruch 2, wobei Einrichtungen vorgesehen sind zum selektiven Aufnehmen der Adresseninformation aus der Zentralprozessoreinheit oder aus dem Speichersystem, und zwar relativ zu den neuen Befehlen.

5. Steuereinrichtung für ein Computersystem nach Anspruch 4, wobei die Anordnung eine Vielzahl von Pegeln aufweist, wobei jeder Pegel eine Vielzahl von Eingangssätzen aufweist.

6. Steuereinrichtung für ein Computersystem nach Anspruch 5, wobei die Vergleichseinrichtung eine Ausgabeauswahleinrichtung (88, 90, 92) enthält, die jeweils jedem der Pegel zugeordnet ist, um eine gesteuerte Auswahl der Adresseninformation der zugehörigen Eingangssätze zu bewirken.

7. Steuereinrichtung für ein Computersystem nach Anspruch 6, wobei die Vergleichseinrichtung weiterhin eine Komparatoreinrichtung (94) enthält, die angeschlossen ist, um die gewählten Ausgangsadresseninformation aus der Anordnung mit der Adresseninformation des neuen Befehls zu vergleichen.

8. Steuereinrichtung für ein Computersystem nach Anspruch 7, wobei die Ausgangsauswahleinrichtung, die jedem der Pegel zugeordnet ist, eine Vielzahl von Auswahleinheiten enthält, wobei jede der Vielzahl von Auswahleinheiten angeschlossen ist, um durch Adressensignal aus einer unterschiedlichen Quelle in Betrieb gesetzt zu werden.

9. Steuereinrichtung für ein Computersystem nach Anspruch 8, wobei die Zentralprozessoreinheit weiterhin eine Befehlsholeinheit (26) enthält, und wobei die Vielzahl der Auswahleinheiten eine erste Auswahleinheit (88) enthält, die angeschlossen ist, um auf Adresseninformationssignale von der Befehlsholeinheit zu antworten, eine zweite Auswahleinheit (90) enthält, die angeschlossen ist, um auf Pipeline-Basis geleitete Adresseninformationssignale von dem Cache-Speicher zu antworten, und eine dritte Auswahleinheit (92) enthält, die angeschlossen ist, um auf Adresseninformationssignale aus dem Speichersystem zu antworten.

10. Steuereinrichtung für ein Computersystem nach Anspruch 9, wobei die Einrichtung zum Bewerten weiterhin eine Ausgabeauswahleinrichtung (96, 98, 100) enthält, die jeweils den Pegeln zugeordnet ist, um eine gesteuerte Auswahl der Funktions-Flag-Information zu bewirken.

**Revendications**

1. Des moyens de commande pour commander le flux de données dans un système informatique ayant une mémoire principale (14, 16) (MM) et une unité centrale (2, 4) (CPU), ladite CPU étant associée à une antémémoire (22) (CU) pour assurer un accès rapide à ladite CPU pour les données stockées, ladite CPU après avoir effectuée une opération modifiant les données effectue tout de suite après une autre opération destinée à entrer lesdites données dans ladite CU; ladite CPU éant du type "pipeline" où les instructions et leurs opérandes associés sont préparés et entrés dans une file d'attente (en 26) pour une exécution ultérieure par la CPU au fur et à mesure qu'ils sortent de la file d'attente; ladite CPU étant associée auxdits moyens de commande qui est caractérisée par:

une mémoire (64) pour contenir, pour lesdites instructions dans ladite file d'attente, une représentation de l'adresse de l'antémémoire des opérandes desdites informations d'instruction et de fonction concernant l'opération qui doit être effectuée par ladite instruction;

un premier circuit (72) pour déterminer si la représentation de l'adresse de l'antémémoire des opérandes ("adresse primaire") de chaque nouvelle instruction, immédiatement avant son entrée dans la file d'attente, est la même qu'une représentation dans ladite mémoire (64) et, si ladite détermination est positive, pour générer un premier signal; et

un second circuit (74) sensible audit premier signal pour évaluer l'information de fonction (drapeaux) dans ladite mémoire (64) qui correspond à ladite représentation d'adresse de ladite nouvelle instruction pour déterminer si l'exécution de ladite nouvelle instruction après l'entrée dans ladite file d'attente pourrait introduire des erreurs dans l'opérande à traiter et pour générer un second signal représentatif de cette détermination.

2. Des moyens de commande pour commander le flux de données dans le système informatique selon la revendication 1 pour éviter la mise en application d'instructions contradictoires dans le "pipeline", lesdits moyens de commande étant caractérisés en ce que:

ladite mémoire est un ensemble de mémoires (64) ayant plusieurs emplacements adressables; des moyens pour stocker ledit ensemble à des emplacements d'adresse sélectionnés, des informations d'adresse et de fonction relatives à chaque instruction actuellement dans ledit "pipeline"; et en ce que

ledit premier circuit est un moyen (72) pour comparer l'information d'adresse relative à chaque nouvelle instruction à l'information d'adresse dans ledit ensemble pour détecter la présence d'instructions antérieures encore en cours relatives aux même données comme lesdites nouvelles instructions, pour produire un signal HIT dans le cas d'une coïncidence d'adresses; et en ce que

ledit second circuit est un moyen (74) pour évaluer l'information de fonction correspondant à une adresse de coïncidence dans ledit ensemble pour déterminer si la mise en application de ladite nouvelle instruction provoquerait un conflit, lesdits moyens pour évaleur comprenant des moyens pour émettre un signal BREAK destiné audit système informatique au cas où un conflit serait indiqué.

3. Des moyens de commande pour un système informatique selon la revendication 2 dans lesquels ledit ensemble de mémoires comprend des emplacements adressables qui sont adressés et en relation avec les chiffres sélectionnés de ladite information d'adresse stockée dedans.

4. Des moyens de commande pour un système informatique selon la revendication 2 dans lesquels des moyens sont prévus pour recevoir ladite information d'adresse relative auxdites nouvelles instructions sélectivement à partir de ladite unité centrale ou bien à partir dudit système de mémoire.

5. Des moyens de commande pour un système informatique selon la revendication 4 dans lesquels ledit ensemble comprend plusieurs niveaux dont chacun a plusieurs séries d'entrées.

6. Des moyens de commande pour un système informatique selon la revendication 5 dans lesquels ledit moyen de comparaison comprend des moyens de selection de sortie (88, 90, 92) associés, respectivement, à chacun des niveaux pour effectuer une sélection contrôlée de l'information d'adresse des séries d'entrées associées.

7. Des moyens de commande pour un système informatique selon la revendication 6 dans lesquels ledit moyen de comparaison comprend en outre un moyen comparateur (94) connecté de façon à comparer l'information d'adresse de sortie sélectionnée à partir dudit ensemble à ladite information d'adresse de ladite nouvelle instruction.

8. Des moyens de commande pour un système informatique selon la revendication 7 dans lesquels lesdits moyens de sélection de sortie associés à chacun desdits niveau comprennent plusieurs unités de sélection, chacune desdites diverses unités de sélection étant connectée de façon à être activée, respectivement, par les signaux d'adresse issus d'une source différente.

9. Des moyens de commande pour un système informatique selon la revendication 8 dans lesquels ladite unité centrale comprend en outre une unité de prise en charge des instructions (26), et où lesdites diverses unités de sélection comprennent une première unité des sélection (88) connectée de façon à repondre aux signaux d'informations d'adresses issus de ladite unité de prise en charge des instructions, une seconde unité de sélection (90) connecté de façon à répondre aux signaux d'informations d'adresses de "pipeline" issus de ladite antémémoire et une troisième unité de sélection (92) connectée de façon à répondre aux signaux d'informations d'adresses issus dudit système de mémoire.

10. Des moyens de commande pour un système informatique selon la revendication 9 dans lesquels ledit moyen d'évaluation comprend en outre des moyens de sélection de sortie (96, 98, 100) associés, respectivement, à chacun des niveaux pour effectuer une sélection contrôlée de ladite information de drapeau de fonction.

FIG. I

F I G. 2

FIG. 3

FIG.4

F I G. 5

FIG. 6